# EUROPÄISCHE PATENTANMELDUNG

(11) **EP 0 801 260 A1**
(43) Veröffentlichungstag der Anmeldung: **15.10.1997**
(21) Anmeldenummer: 97104118.1
(22) Anmeldetag: 12.03.1997
(51) Int. Cl.: F16P 3/14, E05F 15/00

(54) **Sicherheitseinrichtung für einen Antrieb, insbesondere Garagentorantrieb**

(30) Priorität: 12.04.1996 DE 19614461
(71) Anmelder: ROBERT BOSCH GMBH, 70442 Stuttgart (DE)
(72) Erfinder: Tobias, Ralph, 76534 Baden-Baden (DE); Buehner, Peter, 71679 Asperg (DE); Siegwart, Bernhard, 71723 Grossbottwar (DE)

(57) **Zusammenfassung**

Eine Sicherheitseinrichtung für einen Antrieb, insbesondere Garagentorantrieb, enthält einen Mikrokontroller (7) in einer gemeinsamen Versorgungs- und Auswerteeinheit (1), an die zumindest eine Sensoreinheit (3, 4, 5) angeschlossen ist, welche die Bewegung und/oder Position des bewegbaren Teils überwacht. Es ist zumindest eine Anschlußschnittstelle (2) vorgesehen, an welche die Sensoreinheiten (3, 4, 5) anschließbar sind. Die Anschlußschnittstellen (2) sind Teil der gemeinsamen Versorgungs- und Auswerteeinheit (1), und versorgen über ihre Außenanschlüsse (21, 22, 23, 24) die jeweils angeschlossene Sensoreinheit (3, 4, 5) sowohl mit Versorgungsenergie als auch mit Steuersignalen. Das Steuersignal (11) wird in Reihe von einer zur nächsten Anschlußschnittstelle bzw. Sensoreinheit über eine vorgesehene Leitung (25) weitergegeben. Dadurch sind mit einem Steuersignal alle Sensoreinheiten zu erfassen und zu überwachen.

## Beschreibung

### Stand der Technik

Die Erfindung geht aus von einer Sicherheitseinrichtung für einen Antrieb, insbesondere Garagentorantrieb, mit einer einen Mikrokontroller enthaltenden Auswerteeinrichtung der im Oberbegriff des Anspruchs 1 definierten Gattung.

Aus der DE 42 39 609 A1 ist eine Schaltungsanordnung für die Überwachung von Abtasteinrichtungen bekannt, welche Bewegung und Position eines zwischen zwei Entstellungen bewegbaren Teils, wie beispielsweise ein Garagentor, detektieren. Die unabhängig von der Bewegungsrichtung des Tores ansprechende Abtasteinrichtung sowie die abhängig von der Bewegungsrichtung des Tores ansprechenden Abtasteinrichtungen sind parallel zueinander an die Auswerteschaltung angeschlossen. Diese enthält einen Mikrokontroller zur Auswertung, Steuerung und Überwachung der verschiedenen Funktionen sowie zur Ansteuerung des Antriebsmotors. Bei dieser bekannten Schaltungsanordnung sind, um eventuelle Ausfälle des Mikrokontrollers zu berücksichtigen, die abhängig von der Bewegungsrichtung des Tores ansprechenden Abtasteinrichtungen auch direkt auf die beiden bewegungsorientierten Schaltungseinheiten geführt, um diese zum Anhalten des Antriebs im Störfall zu Veranlassen.

Neben dieser notwendigen Parallelität von Ansteuerung und Überwachung, die erheblichen Aufwand erfordert, ist durch die Parallelität der Anschlüsse aller Sensoreinheiten an die den Mikrokontroller enthaltende Auswerteeinrichtung bereits grundsätzlich größerer Aufwand notwendig.

### Vorteile der Erfindung

Die erfindungsgemäße Sicherheitseinrichtung für einen Antrieb mit den kennzeichnenden Merkmalen des Anspruchs 1 hat demgegenüber den Vorteil der sehr kostengünstigen Realisierung, was sowohl die Anzahl und den Umfang von Einzelkomponenten als auch die Signalauswertung selbst angeht.

Gemäß der Erfindung wird dies prinzipiell dadurch erreicht, daß eine gemeinsame Versorgungs- und Auswerteeinheit vorgesehen ist, in welcher der Mikrokontroller enthalten ist, zumindest eine Anschlußschnittstelle vorgesehen ist, an welche die Sensoreinheit anschließbar ist, diese Anschlußschnittstelle Teil der gemeinsamen Versorgungs- und Auswerteeinheit ist, und über die Anschlußschnittstelle die angeschlossene Sensoreinheit sowohl mit Versorgungsenergie als auch mit Steuersignalen versorgt wird. Entsprechend einer besonders vorteilhaften Ausführungsform der Erfindung kann die Versorgungs- und Auswerteeinheit und/oder der Mikrokontroller aus der bereits im Antrieb vorhandenen Versorgungseinheit und/oder dem im Antrieb vorhandenen Mikrokontroller bestehen.

Diese erfindungsgemäße Lösung minimiert die Anzahl elektronischer und mechanischer Komponenten, erübrigt jeweils separate Spannungsversorgungen in den einzelnen Sensoreinheiten und vereinfacht die Signalauswertung.

Durch die in weiteren Ansprüchen niedergelegten Maßnahmen sind vorteilhafte Weiterbildungen und Verbesserungen der im Anspruch 1 angegebenen Sicherheitseinrichtung möglich.

Entsprechend einer ersten vorteilhaften Weiterbildung der Erfindung sind bei Vorhandensein von mehreren Anschlußschnittstellen diese Teil der gemeinsamen Versorgungs- und Auswerteeinheit und das von dieser ausgesandte Steuersignal durchläuft und überwacht die Anschlußschnittstellen bzw. die daran angeschlossenen Sensoreinheiten der Reihe nach. Dadurch ist zur Überwachung und Auswertung nur ein einziges Signal notwendig, was eine erhebliche Vereinfachung darstellt.

In besonders zweckmäßiger Ausgestaltung der Erfindung ist das von der gemeinsamen Versorgungs- und Auswerteeinheit ausgesandte Steuersignal, ebenso wie das bei Fehlerfreiheit empfangene Auswertesignal, ein Wechselsignal, vorzugsweise ein Rechtecksignal. Dies ist zum einen aus signaltechnischen Gründen von Vorteil, trägt zum anderen wesentlich zu einer Strom sparenden Betriebsweise bei und ermöglicht darüber hinaus gleichzeitig die Überwachung der angeschlossenen Sensoreinheiten.

Gemäß einer besonders vorteilhaften Ausführungsform der Erfindung wird das von der gemeinsamen Versorgungs- und Auswerteeinheit ausgesandte Steuersignal über einen Signalausgang der ersten Anschlußscnittstelle der ersten Sensoreinheit zugeführt, das Ausgangssignal dieser ersten Sensoreinheit ist dann auf den Steuereingang der ersten Anschlußschnittstelle geführt, und von dieser ist es anschließend über eine zwischen den Anschlußschnittstellen vorgesehene Leitung als Ausgangssignal auf den Steuerausgang der nächsten Anschlußschnittstelle für die nachfolgende geführt.

Die erfindungsgemäß gestaltete Sicherheitseinrichtung ist sehr flexibel. In vorteilhafter Ausgestaltung sind als Sensoreinheit eine Einweglichtschranke und/oder eine Reflektionslichtschranke und/oder eine elektronische Kontaktleiste vorgesehen, wobei die Einweglichtschranke an zwei nebeneinander liegende Anschlußschnittstellen angeschlossen ist und der Sender, den ersten Teil bildend, an die erste und der Empfänger, den zweiten Teil bildend, an die zweite in dem Signaldurchlauf liegende Anschlußschnittstelle angeschlossen ist. Es ist durchaus denkbar, daß weitere nach diesem Konzept zu entwickelnde Sensoreinheiten, die unter sich nach jeweils anderen Prinzipien arbeiten, angeschlossen werden können. So ist dabei an Kontaktmatten, Bewegungsmelder, Ultraschallsensoren und ähnliches zu denken.

In weiterer zweckmäßiger Ausgestaltung der Erfindung ist an nicht benutzten Anschlußschnittstellen eine Brücke vorgesehen, welche den Signalausgang direkt mit dem Signaleingang der betreffenden Anschlußschnittstelle verbindet.

Entsprechend einer weiteren, besonders zweckmäßigen Ausgestaltung sind die universell für alle Sensoreinheiten verwendbaren Anschlußschnittstellen als Steckverbinder, beispielsweise aus Telephonkabelsteckern und Leitungen, aufgebaut.

Gemäß einer zusätzlichen vorteilhaften Ausgestaltung der Erfindung ist das Eingangssignal der letzten Anschlußschnittstelle über eine Signalanpassung auf die Signalauswertungsschaltung des Mikrokontrollers geführt.

Entsprechend einer weiteren möglichen Ausgestaltung der Erfindung, welche zur Erfüllung besonderer Sicherheitserfodernisse nützlich sein kann, ist vorgesehen, daß ein Ausgangssignal der Signalanpassung auch direkt auf die Schaltungseinheit zur Ein- und Ausschaltung des Antriebsmotors geführt ist.

### Zeichnung

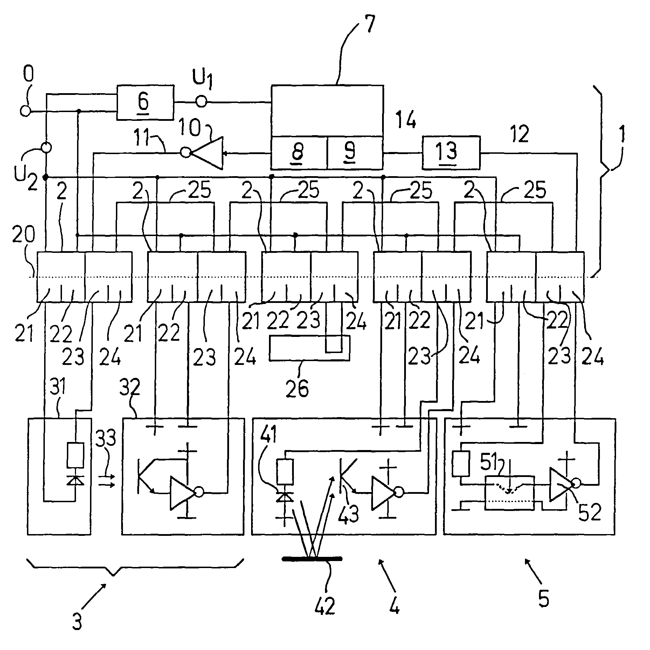

Die Erfindung ist anhand eines in der Zeichnung dargestellten Ausführungsbeispiels in der nachfolgenden Beschreibung näher erläutert. Die einzige Figur zeigt schematisch ein Blockschaltbild der erfindungsgemäß gestalteten Sicherheitseinrichtung für einen Antrieb.

### Beschreibung des Ausführungsbeispiels

Die in einem Blockschaltbild der Figur schematisch dargestellte erfindungsgemäß gestaltete Sicherheitseinrichtung enthält eine gemeinsame Versorgungs- und Auswerteeinheit 1, die als integrale Bestandteile gemäß dargestelltem Ausführungsbeispiel mehrere Anschlußschnittstellen 2 enthält, sowie drei daran angeschlossene Sensoreinheiten 3, 4 und 5. Als die gemeinsame Versorgungs- und Auswerteeinheit und/oder als der Mikrokontroller können die bereits im Antrieb vorhandene Versorgungseinheit und/oder der im Antrieb vorhandene Mikrokontroller in besonders zweckmäßiger und kostensparender Weise verwendet werden.

In der gemeinsamen Versorgungs- und Auswerteeinheit 1 sind als wesentliche Bestandteile eine Spannungsversorgung 6 und ein Mikrokontroller 7 vorgesehen. Die Spannungsversorgung gibt eine erste Spannung U₁ an den Mikrokontroller 7 und eine zweite Versorgungsspannung U₂ an die Anschlußschnittstellen 2 ab. Weiterhin ist die Spannungsversorgung an Massepotential 0 angeschlossen. Im Mikrokontroller 7 ist eine Signalerzeugung 8 und eine Signalauswertung 9 enthalten. Die Signalerzeugung 8 gibt ein Signal an einen Verstärker 10 ab, dessen Ausgangssignal als Steuersignal 11 der ersten Anschlußschnittstelle 2 zugeführt wird. Die Signalauswertung 9 erhält als Auswertesignal 12 das von den Sensoreinheiten zurückkommende Steuersignal.

Im in der Figur dargestellten Ausführungsbeispiel sind fünf Anschlußschnittstellen 2 vorgesehen. Alle Anschlußschnittstellen 2 sind gleich aufgebaut und universell für alle anzuschließenden Sensoreinheiten verwendbar. Gemäß einer besonders vorteilhaften Ausführung, die einfach und sehr preiswert ist, werden als Anschlußschnittstellen Steckverbinder eingesetzt, die beispielsweise aus Telephonkabelsteckern und Leitungen aufgebaut sein können. Jede Anschlußschnittstelle 2, angeordnet beispielsweise auf der Platine der gemeinsamen Versorgungs- und Auswerteeinheit 1, besitzt auf der der gemeinsamen Versorgungs- und Auswerteeinheit 1 zugewandten Seite vier Anschlüsse. In der Figur ist diese Seite diejenige, die oberhalb der gestrichelten Linie 20 angeordnet ist. An zwei der Anschlüsse sind Versorgungsspannung U₂ und Massepotential 0 und an zwei weitere Anschlüsse sind Signalleitungen angeschlossen. Jede Anschlußschnittstelle 2 ist weiterhin mit vier Außenanschlüssen 21, 22, 23 und 24 versehen. An den Außenanschlüssen 21 und 22 stehen Versorgungsspannung U₂ und Massepotential 0 zur Versorgung der angeschlossenen Sensoreinheiten an. Die Außenanschlüsse 23 und 24 bilden Signalanschlüsse. Dabei ist im dargestellten Beispiel der Außenanschluß 23 als Signalausgang zu bezeichnen, da von ihm die jeweils angeschlossene Sensoreinheit angesteuert wird. Das von der Sensoreinheit kommende Signal wird auf den Außenanschluß 24 gelegt, so daß dieser den Signaleingang der jeweiligen Anschlußschnittstelle 2 bildet.

Gemäß der Erfindung wird das von der Versorgungs- und Auswerteeinheit 1 ausgesandte Steuersignal 11 der ersten Anschlußschnittstelle 2, im gezeigten Ausführungsbeispiel die links angeordnete, auf der Innenseite des Außenanschlusses 23 als Signalausgangssignal dieser ersten Anschlußschnittstelle 2 zugeführt. Auf der Innenseite jeder Anschlußschnittstelle 2, also oberhalb der gestrichelten Linie 20, ist eine verbindungsleitung 25 vom Signaleingang 24 der im Signaldurchlauf gesehen vorhergehenden zu dem Signalausgang 23 der nachfolgenden Anschlußschnittstelle 2 vorgesehen. Über diese Verbindungsleitung 25 ist der Signalfluß bzw. Signaldurchlauf von Anschlußschnittstelle 2 zu Anschlußschnittstelle 2 bzw. durch die daran angeschlossenen Sensoreinheiten 3, 4, 5 sichergestellt. Das Steuersignal 11 kann also bei nicht betätigten Sensoreinheiten, d. h. wenn von keinem ein Hindernis oder eine Störung detektiert wird, der Reihe nach durchlaufen, zur Signalauswertung 9 gelangen und damit auch die Funktionsfähigkeit der einzelnen Sensoreinheiten 3, 4, 5 überwachen. Von der Innenseite gegenüber dem Signaleingang 24 der letzten Anschlußschnittstelle 2, im dargestellten Beispiel also der rechten, wird das Auswertesignal 12 über eine Signalanpassung 13 auf den Eingang 14 der Signalauswertung 9 im Mikrokontroller 7 zur weiteren Verarbeitung geführt.

An der von links gesehenen ersten und zweiten Anschlußschnittstelle 2, also generell an zwei direkt nebeneinander liegenden Anschlußschnittstellen, ist eine aus zwei Teilen bestehende Sensoreinheit 3, eine Einweglichtschranke, angeschlossen. Dabei bildet ein Sender 31 den ersten Teil und ein Empfänger 32 den zweiten Teil der Einweglichtschranke 3. Der Sender 31 ist an den Versorgungsspannungsanschluß 21 und den Signalausgang 23 der ersten Anschlußschnittstelle 2 angeschlossen. Der Empfänger 32 ist an die beiden Versorgungsspannungsanschlüsse 21 und 22 zur Spannungsversorgung und mit seinem Sensorsignalausgang an den Signaleingang 24 der zweiten Anschlußschnittstelle 2 angeschlossen, wobei die Reihenfolge im Sinne des Durchlaufs des Steuersignals 11 gesehen ist. In diesem besonderen Fall wird über den Signalausgang 23 der zweiten Anschlußschnittstelle 2 dem Empfänger 32 kein Steuereingangssignal zugeführt, da er dieses ja über die mit den beiden Pfeilen 33 angedeutete im Rhythmus der Frequenz des zugeführten Steuersignals 11 blinkende Lichtstrahlung erhält. Auf den Innenaufbau von Sender 31 und Empfänger 32 der Einweglichtschranke 3 wird nicht näher eingegangen, da dies nicht mit der Erfindung zusammenhängt.

An die dritte Anschlußschnittstelle 2, die in der Mitte der fünf dargestellten liegt, ist gemäß dem dargestellten Ausführungsbeispiel keine Sensoreinheit angeschlossen. Damit die Signalweitergabe nicht unterbrochen wird, ist eine Brücke 26 vorgesehen, welche den Signalausgang 23 der Anschlußschnittstelle 2 direkt mit dem Signaleingang 24 derselben Anschlußschnittstelle 2 verbindet.

An die im Signaldurchlauf an vierter Stelle von links liegende Anschlußschnittstelle 2 ist als Sensoreinheit eine Reflektionslichtschranke 4 angeschlossen. Diese ist zur Spannungsversorgung an die diesem Zweck dienenden beiden Außenanschlüsse 21 und 22 angeschlossen. Über den Signalausgang 23 wird das über Leitung 25 von der vorhergehenden Anschlußschnittstelle 2 kommende Signal als Eingangssignal einer als Lichtquelle dienenden Leuchtdiode 41 zugeführt. Dieses Licht wird auf einen außerhalb der Sensoreinheit 4 liegenden Reflektor 42 und von dort in einen lichtempfindlichen, als Empfänger dienenden Transistor 43 gelenkt. Das verstärkte Ausgangssignal der Reflektionslichtschranke 4 bildet das Eingangssignal am den Signaleingang darstellenden Außenanschluß 24 dieser Anschlußschnittstelle 2. Von dort gelangt das Signal als Signalausgang auf die nachfolgende Anschlußschnittstelle 2.

An diese im Signaldurchlauf letzte Anschlußschnittstelle 2, d. h. im dargestellten Beispiel ganz rechts angeordnete Anschlußschnittstelle 2, ist als Sensoreinheit eine elektronische Kontaktleiste 5 angeschlossen. Auch hier wiederum wird die Sensoreinheit über die Außenanschlüsse 21 und 22 mit Versorgungsspannung versorgt. Das Signal am Signalausgang 23 ist Eingangssignal, welches einem Drucksensor 51 zugeführt wird. Das resultierende Signal wird mittels eines Verstärkers 52 verstärkt als Ausgangssignal der elektronischen Kontaktleiste dem Signaleingang 24 der letzten Anschlußschnittstelle 2 zugeführt.

Das Eingangssignal dieser im Signaldurchlauf letzten Anschlußschnittstelle 2 wird als Auswertsignal 12 über die Signalanpassung 13 auf den Eingang 14 der Signalauswertung 9 im Mikrokontroller 7 geführt. Damit ist der Signalkreislauf geschlossen. Wenn durch Störungen in den einzelnen Sensoreinheiten selbst oder durch deren bestimmungsgemäßes Ansprechen auf ein zu detektierendes Hindernis oder festzustellende Position, der Durchlauf des Steuersignals 11 unterbrochen wird, dann wird durch den Mikrokontroller 7 die vorgesehene Aktion eingeleitet. Dies wird in den meisten Fällen das Abschalten des Antriebsmotors sein.

Wenn es bestimme Sicherheitserfordernisse verlangen, kann ein nicht dargestelltes Ausgangssignal der Signalanpassung 13 auch zusätzlich direkt auf die ebenfalls nicht dargestellte Schaltungseinheit zur Ein- und Ausschaltung des Antriebsmotors geführt werden. Damit kann dann gegebenenfalls der Antrieb auch zum Anhalten gebracht werden, wenn der Mikrokontroller 7 oder auch ein anderer Schaltungsteil eine Störung haben sollte.

Die erfindungsgemäße Sicherheitseinrichtung ist sehr flexibel und ermöglicht es, wenige oder auch viele Sensoreinheiten an die vorgesehenen Anschlußschnittstellen anzuschließen. Die in der gemeinsamen Versorgungs- und Auswerteeinheit vorhandene Auswerteschaltung mit Mikrokontroller dient gleichzeitig sowohl der Strom- als auch der Signalversorgung und Signalauswertung sämtlicher angeschlossener Sensoreinheiten. Dadurch ist es durch die Erfindung ermöglicht, daß die Sensoreinheiten in vorteilhafter Weise kostengünstig aus einer minimalen Anzahl von elektronischen und mechanischen Komponenten aufgebaut werden können. Durch die erfindungsgemäß vorgesehene Signalweitergabe werden alle der Sicherheit dienenden Sensoreinheiten in Reihe geschaltet. Somit reicht es aus, nur ein einziges Steuersignal auszugeben, um alle Sensoreinheiten sowohl zu erfassen als auch zu überwachen. Die Überwachung geschieht vorzugsweise durch Verwendung eines Wechselsignals. Ein konstanter Pegel des Auswertesignals, sei er hoch oder niedrig, sowie eine veränderte Wechselfrequenz weisen auf eine Fehlfunktion mindestens einer Sensoreinheit hin oder auf das Vorhandensein eines Hindernisses. Durch die verwendete Wechselform, insbesondere Rechteckform, des Steuersignals ist darüber hinaus ein Strom sparender Betrieb sichergestellt.

## Patentansprüche

1. Sicherheitseinrichtung für einen Antrieb, insbesondere Garagentorantrieb, mit einer einen Mikrokontroller (7) enthaltenden Auswerteeinrichtung, an die zumindest eine Sensoreinheit (3, 4, 5) angeschlossen ist, welche die Bewegung und/oder Position des in zwei Richtungen bewegbaren Teils überwacht,
dadurch gekennzeichnet, daß
eine gemeinsame Versorgungs- und Auswerteeinheit (1) vorgesehen ist, in welcher der Mikrokontroller (7) enthalten ist,
zumindest eine Anschlußschnittstelle (2) vorgesehen ist, an welche die Sensoreinheit (3, 4, 5) anschließbar ist,
diese Anschlußschnittstelle (2) Teil der gemeinsamen Versorgungs- und Auswerteeinheit (1) ist, und
über die Anschlußschnittstelle (2) die angeschlossene Sensoreinheit (3, 4, 5) sowohl mit Versorgungsenergie als auch mit Steuersignalen versorgbar ist.

2. Sicherheitseinrichtung nach Anspruch 1, dadurch gekennzeichnet, daß die Versorgungs- und Auswerteeinheit (1) und/oder der Mikrokontroller (7) aus der bereits im Antrieb vorhandenen Versorgungseinheit und/oder dem im Antrieb vorhandenen Mikrokontroller bestehen kann.

3. Sicherheitseinrichtung nach Anspruch 1 oder 2, dadurch gekennzeichnet, daß bei Vorhandensein von mehreren Anschlußschnittstellen (2) diese Teil der gemeinsamen Versorgungs- und Auswerteeinheit (1) sind und daß das von dieser ausgesandte Steuersignal (11) die Anschlußschnittstellen (2) bzw. die daran angeschlossenen Sensoreinheiten (3, 4, 5) der Reihe nach durchläuft und überwacht.

4. Sicherheitseinrichtung nach Anspruch 1, 2 oder 3, dadurch gekennzeichnet, daß das von der gemeinsamen Versorgungs- und Auswerteeinheit (1) ausgesandte Steuersignal (11), ebenso wie das bei Fehlerfreiheit empfangene Auswertesignal, ein Wechselsignal, vorzugsweise ein Rechtecksignal ist.

5. Sicherheitseinrichtung nach einem der Ansprüche 3 oder 4, dadurch gekennzeichnet, daß das von der gemeinsamen Versorgungs- und Auswerteeinheit (1) ausgesandte Steuersignal (11) über einen Signalausgang (23) der ersten Anschlußschnittstelle (2) der ersten Sensoreinheit (3) zugeführt wird, daß das Ausgangssignal dieser ersten Sensoreinheit (3) auf den Steuereingang (24) der ersten zugehörigen Anschlußschnittstelle (2) geführt ist, und von dieser über eine zwischen den Anschlußschnittstellen (2) vorgesehene Leitung (25) als Ausgangssignal auf den Steuerausgang (23) der nächsten Anschlußschnittstelle (2) für die nachfolgende Sensoreinheit (4) geführt ist.

6. Sicherheitseinrichtung nach einem der vorigen Ansprüche, dadurch gekennzeichnet, daß als Sensoreinheit eine Einweglichtschranke (3) und/oder eine Reflektionslichtschranke (4) und/oder eine elektronische Kontaktleiste (5) vorgesehen sind, wobei die Einweglichtschranke (3) an zwei nebeneinander liegende Anschlußschnittstellen (2) angeschlossen ist und der Sender (31), den ersten Teil bildend, an die erste und der Empfänger (32), den zweiten Teil bildend, an die zweite in dem Signaldurchlauf liegende Anschlußschnittstelle (2) angeschlossen ist.

7. Sicherheitseinrichtung nach einem der vorigen Ansprüche, dadurch gekennzeichnet, daß an nicht benutzten Anschlußschnittstellen (2) eine Brücke (26) vorgesehen ist, welche den Signalausgang (23) direkt mit dem Signaleingang (24) der betreffenden Anschlußschnittstelle (2) verbindet.

8. Sicherheitseinrichtung nach einem der vorigen Ansprüche, dadurch gekennzeichnet, daß die Anschlußschnittstellen (2) als Steckverbinder, beispielsweise aus Telephonkabelsteckern und Leitungen, aufgebaut sind.

9. Sicherheitseinrichtung nach einem der vorigen Ansprüche, dadurch gekennzeichnet, daß das Eingangssignal der letzten Anschlußschnittstelle (2) über eine Signalanpassung (13) auf die Signalauswertungsschaltung (9) des Mikrokontrollers (7) geführt ist.

10. Sicherheitseinrichtung nach Anspruch 9, dadurch gekennzeichnet, daß ein Ausgangssignal der Signalanpassung (13) auch direkt auf die Schaltungseinheit zur Ein- und Ausschaltung des Antriebsmotors geführt ist.
